# EUROPEAN PATENT APPLICATION

(11) **EP 2 921 468 A1**
(43) Date of publication of application: **23.09.2015**
(21) Application number: 14382098.3
(22) Date of filing: 20.03.2014
(51) Int. Cl.: C04B 35/52, C04B 38/00, C04B 35/634, C04B 35/638

(54) **Process for the preparation of flexible meso and macroporous carbon foams**

(71) Applicant: CIC Energigune, 01510 Miñano - Álava (ES)
(72) Inventor: KARTHIK, Mani, E-01510 Miñano - Álava (ES)
(74) Representative: ABG Patentes, S.L.

(57) **Abstract**

The present invention describes a process for preparing a flexible hierarchical graphitized carbon foam comprising an interconnected macroporous structure with an ordered mesoporous wall structure, as well as to a process for the synthesis of highly graphitized hierarchical carbon foams.

## Description

### FIELD OF THE INVENTION

The present invention relates to a process for the preparation of flexible hierarchically meso-macroporous structured carbon foams, in particular a flexible carbon foam, optionally graphitized, having interconnected macroporous architecture with ordered mesoporous walls, and its use in many technical fields, such as in the elaboration of adsorbents for separation processes and gas storage, as electrode materials for batteries, fuel cells, supercapacitors and microelectronic components, as insulators, thermal managements and as support for many catalytic processes.

### BACKGROUND

Three dimensional (3D) interconnected carbon foams has become attractive to many researchers because of their unique characteristics such as very high porosity with interconnected porous network, low density, low pressure drop, high thermal stability and low production cost. The flexible physical properties make them useful for various potential applications in such diverse areas as adsorbents for separation processes and gas storage, as electrode materials for batteries, fuel cells, supercapacitors, microelectronics, as insulators, thermal managements, and as supports for many important catalytic processes [Yunpu Zhai et al., Advanced Materials, 2011, 23, 4828-4850; J. Song et al., New Carbon Materials, 2012, 27 (1), 27-34; Straatman, A.G.et al., J. Engineering for Gas Turbines and Power, 2007, 129(2), 326-33]

The carbon foams are mainly classified into three categories such as reticulated vitreous carbon foams (RVC), non-graphitic carbon foams and graphitic carbon foams. Reticulated vitreous carbon (RVC) as well as non-graphitic carbon foams are prepared by foaming and calcination of natural or synthetic polymers [S. Lei et al, Carbon, 2010, 48, 2644-2646; S. Zhang et al., New Carbon Materials, 2010, 25, 9-14]. On the other hand, graphitic carbon foams are generally prepared by foaming of coal, coal tar pitch and petroleum pitch followed by high temperature calcination and graphitization [M. Wang et al., Carbon, 2008, 46, 84-91; Z. Min et al., New Carbon Materials, 2007, 22, 75-79]. The graphitized porous carbon has high conductivity, well-aligned crystalline structure and good thermal stability.

In this concern, several research approaches have already been done for the fabrication of macroporous with mesoporous (bimodal) carbon materials, as well as bimodal carbon composites, which are well summarized in several review articles [Yunpu Zhai et al., Advanced Materials, 2011, 23, 4828-4850; An-Hui Lu et al., Macromolecular Chemistry Physics, 2012, 213, 1107-1131; Chengdu Liang et al., Angewandte Chemie International Edition, 2008, 47, 3696-3717; A. Stein, Advanced Materials, 2003, 15, 763-775; Z.Y. Yuan and B.L. Su, J. Material Chemistry, 2006, 16, 663-677]. These bimodal carbon materials have advantages over the unimodal carbon materials (mesoporous or macroporous carbon) in terms of diffusion efficiency, high surface area and good electrical and thermal conductivity.

However, it has been observed from the literature that most of the research articles have mainly been focused on the preparation of macroporous with mesoporous carbon materials with different forms like carbon powders, aerogel powder or particles, micro/macro-spheres, fibers and graphite powder [W. Sui et al., Materials Letters, 2011, 65, 2534-2536; Z. Wang et al., Carbon, 2008, 46, 1702-1710; C-H. Huang et al., Carbon, 2011, 49, 3055-3064; S. Lu and Y. Liu, Applied Catalysis B: Environmental, 2012, 111-112, 492-501; X. Lu et al., J. Chem. Biosensors and Bioelectronics, 2009, 25, 244-247]. The small particles, as well as powder forms, of the carbon materials might limit the applicability of these materials because these materials can create a high pressure drop.

The preparation of macroporous with mesoporous (bimodal) carbon foams have been found in a document of the prior art [Xue et al., Nano Res., 2009, 2, 242-253]. This document discloses a process for the synthesis of hierarchically porous carbonaceous monolith materials with ordered mesostructure that comprises the use of a macroporous monolithic template of polyurethane (PU) foam which is coated with an ethanol solution containing the carbon precursor (e.g. resol) and triblock copolymer. After self-assembly of the carbon precursor and the copolymer in the PU foam, solvent evaporation is carried out according to a process known as EISA (evaporation induced evaporation.

WO2007/076469 describes a method for preparing a graphitic macroporous carbon foam with improved graphitizability by introducing a graphitization promoting additive into the carbon foam. However, high graphitization temperatures, i.e. between 2000 and 2600°C, are required and the degree of graphitization is quite low.

On the other hand, the carbon foams obtained by using PU as template are mostly brittle character which limits their application as electrodes in flexible and portable devices. Although few reports have shown the preparation of flexible macroporous carbon foams by direct carbonization of commercial melamine foam (Kodama, M. et al., Carbon, 2007, 45, 1105-1107; Chen, S. et al., Energy Environ. Sci., 2013, 6, 2435-2439), no flexible macroporous carbon foams with ordered mesoporous on the walls have already been reported. Therefore, it still remains a challenge to find an easy and efficient method for the synthesis of flexible bimodal carbon foams.

### BRIEF DESCRIPTION OF THE INVENTION

The authors of the present invention have developed a process for the synthesis of hierarchically meso and macroporous carbon foams which uses a melamine foam as sacrificial template, which provides a hierarchical carbon foam with the particular feature of having a high flexibility, being also this process simple, versatile and reproducible, which facilitates its large scale industrial production.

Unlike traditional foaming techniques which require the use of blowing agents or oxidative stabilization, or other techniques based on the use of a sacrificial template in which an evaporation induced self-assembly (EISA) is conducted to form the foam precursor with the disadvantages mentioned above, the process of the invention provides macroporous carbon foams with ordered mesoporous on the walls having excellent characteristics including not only a highly flexibility, but also a very high porosity, ultra-lightweight, high specific surface area and pore volume, super-hydrophobicity and low cost, which allows its use in many scientific disciplines like energy harvesting, storage and conversion, advanced electronics, sensing, adsorption, purification, catalysis, etc.

Furthermore, the process of the invention also allows the provision of a graphitized flexible carbon foam with a high degree of graphitization. Even more, the high degree of graphitization can be obtained at temperatures around 1000°C or below as compared to traditional graphitization processes in which graphitization temperatures ranging from 2000 to 2600°C are required.

Thus, a first aspect of the invention refers to a process (from now onwards process 1 of the invention) for the preparation of a flexible hierarchical carbon foam, which can be subjected to a graphitization step, said process comprising:
a) providing a solution comprising a phenolic resin and a poly(alkylene oxide) compound;
b) impregnating a melamine foam or a carbonized melamine foam with the solution obtained in step a);
c) conducting a self-assembly of the phenolic resin and the polyalkylene oxide compound in the melamine foam or carbonized melamine foam, wherein said self-assembly is conducted by a hydrothermal treatment;
d) subjecting the product obtained in step c) to a heating process to thermally crosslink the phenolic resin;
e) subjecting the product obtained in step d) to a carbonization process to remove the polyalkylene oxide compound and the melamine foam and to form a carbonized carbon foam; and
f) optionally, subjecting the carbonized carbon foam obtained in step e) to a graphitization step.

In a particular embodiment, the process 1 of the invention further comprises the addition of a metal nitrate salt selected from iron nitrate, cobalt nitrate and nickel nitrate, to the solution of step a), and in this case the carbonization and graphitization are conducted in the same step. Thus, the process 1 of the invention further comprises:
a) providing a solution comprising a phenolic resin, a poly(alkylene oxide) compound and a metal nitrate salt selected from iron nitrate, cobalt nitrate and nickel nitrate;
b) impregnating a melamine foam or a carbonized melamine foam with the solution obtained in step a);
c) conducting a self-assembly of the phenolic resin and the polyalkylene oxide compound in the melamine foam or carbonized melamine foam, wherein said self-assembly is conducted by a hydrothermal treatment;
d) subjecting the product obtained in step c) to a heating process to thermally crosslink the phenolic resin;
e) subjecting the product obtained in step d) to a carbonization and graphitization process to remove the polyalkylene oxide compound and the melamine foam and to form a flexible carbonized and graphitized carbon foam.

A further aspect of the invention refers to a flexible hierarchical carbon foam obtainable by the process as defined above (process 1) when step f) is absent.

Additionally, the invention also refers to a flexible graphitized hierarchical carbon foam obtainable by the process as defined above (process 1) when graphitization is present.

A further aspect of the invention relates to the use of a flexible hierarchical carbon foam or a flexible graphitized hierarchical carbon foam in the preparation of adsorbents for separation processes and gas storage; as electrode materials for batteries, fuel cells, supercapacitors and microelectronic components; as insulators; as thermal managements and as support for catalytic processes.

Furthermore, the authors of the invention have developed a new process for the synthesis of hierarchically graphitized meso and macroporous carbon foams with a higher degree of graphitization, higher specific surface area, lower density and higher porosity with very narrow pore size distribution as compared to other graphitized carbon foams of the prior art, which provides these carbon foams with a higher electrical and thermal conductivity and improved stability.

This process is also based on the process 1 defined above which overcome the disadvantages derived from the use of traditional methods to prepare carbon foams and allows obtaining a higher degree of graphitization even at temperatures around 1000°C or below.

In fact, the comparative data provided in the present application have shown that this process provides a graphitized carbon foam with improved properties as compared to a graphitized carbon foam obtained from a process which includes a EISA method (such as that mentioned by Xue et al. in Nano Research, 2009, 2, 242-253) and a graphitization method as that described in WO2007//076469.

Thus, another aspect of the present invention refers to a process (from now onwards process 2 of the invention) for preparing a hierarchical graphitized carbon foam, wherein said process comprises:
a) forming a solution comprising a phenolic resin, a poly(alkylene oxide) compound and a metal nitrate salt selected from iron nitrate, cobalt nitrate and nickel nitrate;
b) impregnating a polymeric foam with the solution obtained in step a);
c) conducting a self-assembly of the phenolic resin and the polyalkylene oxide compound in the polymeric foam in the presence of the metal nitrate salt, wherein the self-assembly is conducted by a hydrothermal treatment;
d) subjecting the product obtained in step c) to a heating process to thermally crosslink the phenolic resin;
e) subjecting the product obtained in step d) to a carbonization and graphitization process to remove the polyalkylene oxide compound and the polymeric foam and to form a graphitized carbon foam.

A further aspect of the invention refers to a graphitized carbon foam obtainable by a process as defined above (process 2) having an interconnected macroporous structure with an ordered mesoporous wall structure.

A further aspect of the invention relates to the use of a hierarchical graphitized carbon foam as defined above for the preparation of adsorption-separation filters, catalytic converters, heat exchangers, heat sinks and thermal and electrical energy storage devices.

### BRIEF DESCRIPTION OF THE FIGURES

Figure 1. SEM pictures of carbonized hierarchical flexible carbon foam.
Figure 2. TEM pictures of carbonized hierarchical flexible carbon foam.
Figure 3. Nitrogen adsorption and desorption (BET) isotherms and pore size distributions of carbonized hierarchical flexible carbon foam.
Figure 4. (a,b) SEM pictures and (c) XRD pattern of a flexible macro and mesoporous carbon foam functionalized with graphite particles.
Figure 5. (a,b) SEM pictures, (c) EDAX and (d) XRD pattern of a flexible macro and mesoporous carbon foam functionalized with metal/metal oxides.
Figure 6. (a-d) SEM pictures of a flexible macro and mesoporous carbon foam functionalized with CNTs/CNFs
Figure 7. (a,b) SEM pictures; (c) EDAX and (d) FT-IR spectrum of a flexible macro and mesoporous carbon foam functionalized with a hydrophobic silica coating.
Figure 8. SEM pictures of graphitized macro and mesoporous carbon foam.
Figure 9. TEM pictures of graphitized macro and mesoporous carbon foam.
Figure 10. Nitrogen adsorption and desorption isotherms of graphitized hierarchical carbon foam.
Figure 11. Pore size distributions of graphitized hierarchical carbon foam.
Figure 12. SAXS pattern of graphitized hierarchical carbon foam.
Figure 13. XRD pattern of graphitized carbon foams: (a) graphitized macro/mesoporous carbon foam obtained according to example 6; (b) graphitized macro/mesoporous carbon foams obtained according to comparative example 7; (c) graphitized macro/mesoporous carbon foams obtained according to comparative example 8; (d) graphitized macroporous carbon foam obtained according to comparative example 8.
Figure 14. Raman spectra of carbon foams: (a) graphitized macro/mesoporous carbon foam obtained according to example 6; (b) graphitized macro/mesoporous carbon foam obtained according to comparative example 7.
Figure 15. TEM images of carbon foams: (a) graphitized macro/mesoporous carbon foams obtained according to comparative example 8; (b) graphitized macroporous carbon foam obtained according to comparative example 8.

### DETAILED DESCRIPTION OF THE INVENTION

As mentioned before, a first aspect of the present invention relates to a process 1 for preparing a flexible hierarchical carbon foam, which can be subjected to a graphitization step, said process comprising:
a) providing a solution comprising a phenolic resin and a poly(alkylene oxide) compound;
b) impregnating a melamine foam or a carbonized melamine foam with the solution obtained in step a);
c) conducting a self-assembly of the phenolic resin and the polyalkylene oxide compound in the melamine foam or carbonized melamine foam, wherein said self-assembly is conducted by a hydrothermal treatment;
d) subjecting the product obtained in step c) to a heating process to thermally crosslink the phenolic resin;
e) subjecting the product obtained in step d) to a carbonization process to remove the polyalkylene oxide compound and the melamine foam and to form a carbonized carbon foam; and
f) optionally, subjecting the carbonized carbon foam obtained in step e) to a graphitization step.

By the term "hierarchical carbon foam" it is understood a carbon foam having a bimodal pore distribution, i.e. a combination of two average pore sizes, with the primary fraction being the macropores and the minor fraction being the mesopores. In particular, the carbon foam has an interconnected macroporous structure with an ordered mesoporous wall structure. In this particular case, the hierarchical carbon foam has the additional feature that it is flexible.

By the term "interconnected macroporous structure" it is understood a structure formed by macropores having an average size of at least 50 nm, which are interconnected so as to form an open cell structure.

By the term "ordered mesoporous wall structure" it is understood a regular repeating geometrical arrangement, wherein the mesopores are regularly distributed within the external and internal walls of the macropores and wherein the mesoporous have a size varying from 2 to 50 nm.

Step a) of the process 1 includes the formation of a solution comprising a phenolic resin or a phenolic pre-polymer and a polyalkylene oxide compound.

By the term "phenolic resin or phenolic pre-polymer" it is also understood the product resulting from the reaction of phenol, or a substituted phenol, with an aldehyde, in the presence of an acidic or basic catalyst. This phenolic resin is the carbon precursor of the resulting carbon foam obtained after conducting the process 1 of the invention.

Any phenol of the kind which is able to form condensation products with aldehydes can be used. Such phenols include monohydric and polyhydric phenols, such as pyrocatechol, resorcinol, hydroquinone or phloroglucinol; monoalkyl or polyalkyl substituted phenols, such as cresols or xylenols, including for example 2-, 3- or 4-methyl phenol, 2,3-, 2,4-, 2,5- or 2,6-dimethyl phenol, 3,4-, 3,5-dimethyl phenol, 2,3,5-trimethyl phenol; monoacyl or polyacyl substituted phenols, i.e. those phenols substituted with one or more acyl groups; monoalkoxyl or polyalkoxyl substituted phenols, i.e., those phenols substituted with one or more alkoxyl group, such as 3-methoxy phenol, 3,5-dimethoxy phenol, 5-methoxy resorcinol; halogen-substituted phenols, those substituted with fluorine, bromine, chlorine or iodine, more preferably those substituted with fluorine, such as, 2-fluorophenol, 3-fluorophenol or 4-fluorophenol; polynuclear monohydric or polyhydric phenols, such as naphthols, p,p'-dihydroxydiphenyl dimethyl methane or hydroxyanthracenes.

In a preferred embodiment, the phenol is selected from pyrocatechol, resorcinol, hydroquinone or a halogen-substituted phenol. All of them are more reactive than phenol and can lead to some cross-linking at the pre-polymer production stage. Pyrocatechol, resorcinol and hydroquinone can increase the oxygen functionality of the resins, whereas halogen-substituted phenol, such as 2-fluorophenol, 3-fluorophenol and 4-fluorophenol, provide carbon foams functionalized with fluorine.

The phenols used to make the foam starting material can also be used in admixture with non-phenolic compounds which are able to react with aldehydes in the same way as phenol. These compounds include nitrogen containing nucleophilic compounds that are reactive in polycondensation reactions, such as urea, aromatic (aniline) and heteroaromatic (melamine) amines. These allow the introduction of specific types of nitrogen functionality into the initial polymer (and final carbon) and influence the development of the mesoporous structure of both the resins and the final carbons.

Like hydroquinone and resorcinol, all the nitrogen containing nucleophilic compounds which can be used in the present invention possess two or more active sites and are more reactive in condensation reaction than phenol. It means that they are first to react with primary cross-linking agents forming secondary cross-linking agents in situ. In the case of melamine, it is preferable to prepare the secondary cross-linking agent, hydroxymethylated melamine, in advance.

In another preferred embodiment, the aldehyde includes any suitable aldehyde which reacts with phenols in the same manner, for example, formaldehyde, acetaldehyde or benzaldehyde. More preferably the aldehyde is formaldehyde.

In general, the phenols and aldehydes which can be used in the process of the invention are those described in US 3,960,761 and US 5,047,225, which are incorporated herein by reference.

The phenol pre-polymer can also be a Novolac resin. Novolac resins are typically produced by the acid catalyzed condensation of phenol and formaldehyde in approximately equimolar amounts. Novolacs are essentially linear chains with molecular weights of from 500 to 2000 D, where phenolic moieties are linked with methylene (predominantly) and methylene ether bridges and possess one nucleophilic active site, predominantly in the unsubstituted ortho-position to hydroxyl group. There can be also varying degrees of chain branching depending upon the production conditions.

The reaction of phenol, or a substituted phenol, with an aldehyde, is catalyzed by an acid or base at a aldehyde:phenol ratio which can vary depending on the functionality of the phenol. Preferably, the reaction is catalyzed by hydrochloride, sodium hydroxide or sodium carbonate.

The amount of the phenolic resin in the solution used for the impregnation stage (step b) of the process 1 of the invention) can be adjusted as a function of the diameter of the macropores which it is desired to obtain in the carbon foam on conclusion of the process, it being understood that the lower this amount, the grater the diameter of the macroporous and the finer the internal junctions (walls of the macropores).

Generally, the amount of carbon precursor within the solution varies from 5 to 90% by weight, preferably from 20 to 70% by weight, with respect to the total weight of said solution.

The poly(alkylene oxide) compound is used as structure-directing agent and is the responsible of generating the ordered mesoporous wall structure within the macroporous structure. This compound is typically an amphiphilic poly(alkylene oxide) block copolymer. Preferably, the block copolymer is a triblock copolymer containing segments of poly(ethylene oxide) (hydrophilic) and poly(propylene oxide) (hydrophobic) in such a way that the poly(ethylene oxide) is covalently bond with the opposite ends of the poly(propylene oxide) according to the following formula:

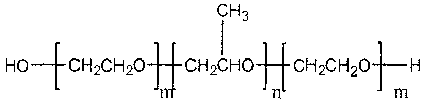

Suitable triblock copolymers are Pluronic F127 (EO₁₀₆PO₇₀EO₁₀₆), Pluronic F123 (EO₂₀PO₇₀EO₂₀) or Pluronic F108 (EO₁₃₂PO₅₀EO₁₃₂).

The solvent used to prepare the solution of step a) is preferably water or a mixture of water with at least one organic solvent selected from lower alcohols, such as ethanol, methanol, propanol, iso-propanol or butanol; dimethylformamide (DMF), dimethyl sulfoxide (DMSO), tetrahydrofuran (THF), toluene and their mixtures. In a preferred embodiment, the solvent is a mixture of water and ethanol.

In a particular embodiment, the solution comprising the phenolic resin and the polyalkylene oxide compound is prepared by first dissolving the phenol, or the substituted phenol, and the polyalkylene oxide compound in the solvent. In a subsequent step, the acidic or base catalyst is added to said solution and after that, the aldehyde is also added to the solution until a homogenous solution is obtained.

In a particular embodiment, the molar composition of the compounds used to form the solution is:
- phenol, or substituted phenol: 1
- aldehyde: 0.5-3
- poly(alkylene oxide): 0.005-0.05
- organic solvent: 10-40
- water: 50-100

In a particular embodiment of the invention, when a flexible graphitized carbon foam wants to be obtained, the solution provided in step a) of the process 1 of the invention can also include a metal nitrate salt selected from iron nitrate, cobalt nitrate and nickel nitrate. By the addition of this metal nitrate salt, complexes between the alkylene oxide units of the poly(alkylene oxide) compound and Fe²⁺, Co²⁺ or Ni²⁺ ions are formed.

Once the solution comprising the phenolic resin, the polyalkylene oxide compound and, optionally the metal nitrate salt, is prepared, this is used to impregnate a melamine foam or a carbonized melamine foam according to the second step of the process 1 of the invention.

This foam is used as macrostructure sacrificial template or scaffold and provides a 3D interconnecting macroporous architecture with large voids and interfaces for the self-assembly of the ordered mesostructure. This particular foam is the responsible of impairing flexibility to the hierarchical carbon foam.

The impregnation of the melamine foam or the carbonized melamine foam with the solution obtained in step a) can be carried out by spraying, brushing or pouring the solution onto or over the foam or by complete immersion of the foam into the solution for a period of time.

When the foam is impregnated with the carbon precursor solution, it is infused into the interconnecting 3D networks and large macropore voids by capillarity and wetting driving forces.

In order to fully fill up the macropore voids of the foam, a squeezing process to remove the air babbles inside the foam can be carried out.

The third step of the process 1 of the invention involves the self-assembly of the phenolic resin and the polyalkylene oxide compound to form a uniform layer of the ordered mesostructured phenolic resin on the 3D interconnecting macropores of the foam.

The thickness of the layer depends on the concentration of the phenolic resin, however, in a preferred embodiment, the thickness is less than 20 µm.

The self-assembly of the phenolic resin and the polyalkylene oxide compound is performed by a hydrothermal treatment.

A possible mechanism that leads to the formation of ordered carbon mesostructures into the macroporous structure is described below.

The hydroxyl groups of the phenolic compound interact with the alkylene oxide moieties of the poly(alkylene oxide) compound, giving rise to the cross-linking of the interpolymer chains by hydrogen bonding. The interpolymer-chain hydrogen bonding cross-links the poly(alkylene oxide) compound and thereby stabilize the micelle structures in which the phenolic resin is enriched inside the alkylene oxide domains. The resulting compounds then self-assembly according to the mesoscopic ordering directed principally by the phase separation of the poly(alkylene oxide) species.

In the particular case of adding a metal nitrate salt to the solution provided in step a), the interpolymer-chain hydrogen bonding cross-links the poly(alkylene oxide)-metal complexes.

In a particular embodiment, this hydrothermal treatment can be conducted at autogeneous pressure which corresponds to the saturated vapor pressure of the carbon precursor solution. The temperature applied in the hydrothermal process ranges from about 40 to about 200°C, more preferably form 40 to 100°C, even more preferably at about 50°C. A skilled person will know how to adapt the temperature depending on the composition of the carbon precursor solution.

Said hydrothermal process is preferably conducted in an autoclave, such as for example in a polypropylene bottle or stainless steel autoclave, keeping the autoclave in a hot air oven which is heated at the temperature required by the process.

During the hydrothermal treatment, the temperature and pressure are holding in the autoclave for generally about 1 to 4 days. After finishing the holding period, a coated melamine foam is obtained and then the solvent can be easily removed due to the improved drying performance of the resulting product.

This hydrothermal treatment offers many advantages with respect to the conventional evaporation induced self-assembly (EISA) method at room temperature. From the environmental concern, hydrothermal processes are more environmentally benign since the waste solvents can be recycled. In addition to that, the process is more economic since it requires a conventional and easy method to separate the product from the solvents, in contrast to the EISA method which requires the solvents to be evaporated at room temperature. Thus, the hydrothermal treatment allows the implementation of the process of the invention in a large-scale industrial production.

In addition to that, the hydrothermal treatment contributes to the reduction of the graphitization temperature if a subsequent graphitization step is performed, which leads to the formation of a flexible graphitized carbon foam.

Separation of the impregnated foam from the carbon precursor solution may be accomplished by filtration, decantation or other physical separation techniques known to those skilled in the art.

In a subsequent step, the coated foam obtained after conducting step c) of the process 1 of the invention, is subjected to a heating process in order to thermally cross-link the phenolic resin.

In a particular embodiment, when formaldehyde is used in the production of the phenolic resin, it cross-links phenolic moieties forming -CH₂- bridges in strong acidic and strong alkali media.

In a preferred embodiment, the heating process is conducted at a temperature ranging from 70 to 100°C, more preferably at about 80°C.

Said heating process can be carried out in a conventional oven.

In order to convert the coated melamine foam or coated carbonized melamine foam to a carbon foam, said coated foam is then subjected to a carbonization process according to the step e) of the process 1 of the invention.

In particular, this step provides a flexible non-graphitizing amorphous carbon foam which is also a further aspect of the present invention.

By "carbonization" it is understood the heating of the impregnated foam to a temperature above the thermal decomposition temperature of the poly(alkylene oxide) compound and the polymeric foam (when it is not used in its carbonized form) whereby they are substantially converted to gaseous materials.

In a preferred embodiment, the carbonization process is carried out by heating the impregnated foam to a temperature of from about 500°C to about 1000°C, in an inert or air-excluded atmosphere, such as in the presence of nitrogen or argon. More preferably, the temperature to be applied ranges between 600 and 800°C, even more preferably is about 800°C.

The heating rate should be controlled in order to avoid as much as possible the shrinkage of the foam during carbonization. However, due to the presence of mesopores in these materials, which provide efficient escape routes for the volatile products, the heating rates employed can be from 0.5°C to 10°C per minute.

In addition to that, care should be taken to ensure uniform heating of the foam for effective carbonization.

During carbonization, the poly(alkylene oxide) and the melamine foam template are removed. The ordered mesoporous resin is yielded on the surface of the macroporous of the melamine foam or carbonized melamine foam. The primitive macroporous architecture with the 3D interconnecting macroporous is retained during this step.

In the particular case when a metal nitrate salt is added to the solution provided in step a), the calcination step allows the reduction of the metal nitrates into metallic nanoparticles. In this case, the carbon matrix serves as a block to confine the growth of metal nanoparticles during calcination. It should be said that the combination of the hydrothermal treatment in step c) of the process 1 of the invention together with the addition of a metal nitrate salt into the solution of step a) allows the metallic nanoparticles to be well dispersed and homogeneously distributed on the carbon matrix, in contrast to the bulk agglomerates that are formed when other self-assembly methods are used, such as solvent evaporation method. This well dispersed and homogeneously distributed nanoparticles can act as catalyst allowing the graphitization of the flexible carbonized macro and mesoporous carbon foam in the same step.

Furthermore, these metallic nanoparticles allow the graphitization to be carried out at lower temperatures than conventional (ca. 2500-3000°C) in order to minimize the energy consumption.

In fact, the graphitization can be carried out at a temperature ranging from 700 to 1000°C and no separate steps for carbonization and graphitization are required. Alternatively, the step of graphitization in the process 1 of the invention, which is optional, can be conducted by first impregnating the carbonized macro and mesoporous carbon foam obtained after conducting step e) of the process 1 with a solution of metal nitrates in a solvent, such as ethanol. By this method, metal species in the ethanol medium can be easily absorbed on the high surface area of carbon (hydrophobic surface). The impregnated carbonized macro and mesoporous carbon foam is then subjected to graphitization by heating at a temperature between 700 and 1000°C in an inert or air-excluded atmosphere, such as in the presence of nitrogen or argon.

Another aspect of the present invention refers to a flexible graphitized hierarchically carbon foam obtainable by any of the two alternatives of the process 1 of the invention as defined above, i.e.: by subjecting the carbonized carbon foam obtained in step e) to a graphitization step f), or by adding a metal nitrate salt to the solution obtained in step a) and then conducting the carbonization and graphitization in the last step of the process 1 of the invention. As mentioned before, this graphitized carbon foam is characterized for being flexible and having improved physical properties.

In a particular embodiment, the flexible carbon foam has a total porosity from about 65% to about 95%, more preferably from about 70% to about 95%.

In a preferred embodiment, at least about 90% of the total pore volume, more preferably at least about 95% of the total pore volume corresponds to the macroporous fraction, whereas at least 1% of the total pore volume, more preferably from about 2% to about 10% of the total pore volume corresponds to the mesoporous fraction.

In another preferred embodiment, the macroporous fraction of the bimodal distribution in the carbon foam has an average size of at least 50 nm, more preferably from 50 µm to 1 mm, even more preferably from 50 µm to 700 µm.

In another preferred embodiment, the mesoporous fraction of the bimodal distribution in the carbon foam has an average size from 2 to 50 nm, more preferably from 2 nm to 10 nm.

In a particular embodiment, the flexible carbon foam of the invention has a relatively uniform distribution of macroporous and mesoporous in order to provide a suitable compressive strength. In addition to that, the pores, both macroporous and mesoporous, are relatively isotropic, by which is meant that the pores are relatively spherical, meaning that the pores have, on average, an aspect ratio from about 1.0 (which represents a perfect spherical geometry) to about 1.5. The aspect ratio is determined by dividing the longer dimension of any pore with its shorter dimension.

In a particular embodiment, the flexible carbon foam or the flexible graphitized carbon foam can be functionalized on its surface with graphite particles in order to improve electrical and thermal conductivity.

The functionalization of the flexible carbon foam with graphite particles can be carried out by immersing the flexible carbon foam obtained after conducting step e) or step f) in an ethanol solution containing graphite particles. The graphite particles are then absorbed forming a coating on the surface of the flexible carbon foam and then, the impregnated carbon foam is subsequently dried. This drying can be conducted in a hot air oven at 100°C;

In another particular embodiment, the flexible carbon foam or the flexible graphitized carbon foam can be functionalized on its surface with metal or metal oxides in order to improve the electrical and thermal conductivity, as well as the catalytic, magnetic and mechanical properties.

The functionalization of the flexible carbon foam with metal or metal oxides can be carried out by immersing the flexible carbon foam obtained after conducting step e) or step f) in an ethanol solution containing metals precursors in the form of particles. These particles are absorbed forming a coating on the surface of the flexible carbon foam, and then carbon foam is dried and carbonized in order to get the metal/metal oxides on the surface of the carbon foam.

The drying can be conducted in a hot air oven at 100°C, whereas the carbonization can be carried out at 600-800°C under N₂ flow.

In another particular embodiment, the flexible carbon foam or the flexible graphitized carbon foam can be functionalized with carbon nanotubes or carbon nanofibers in order to improve the electrical and thermal conductivity, as well as the mechanical properties.

The functionalization of the flexible carbon foam with carbon nanotubes or carbon nanofibers can be carried out by immersing the flexible carbon foam in an ethanol solution containing Ferrocene. Ferrocene is used as iron source and acts as catalyst for growing the carbon nanotubes or carbon nanofibers on the surface of the flexible carbon foam. Ferrocene is absorbed and forms a coating on the surface of the carbon foam, and then the foam is dried and carbonized in order to get iron particles on the surface of the carbon foam.

The drying can be conducted in a hot air oven at 100°C, whereas the carbonization can be carried out at 600-800°C under N₂ flow.

The growing of carbon nanotubes or nanofibers on the surface of the flexible carbon foam can be achieved by the chemical vapour deposition (CVD) method using acetylene as carbon source.

In another particular embodiment, the flexible carbon foam or the flexible graphitized carbon foam can be functionalized with a hydrophobic coating in order to impair a hydrophobic character to the foam. The functionalization of the flexible carbon foam with a hydrophobic coating can be carried out by immersing the flexible carbon foam obtained after conducting step e) or step f) in an ethanol solution containing silica compounds, such as tetraethyl orthosilicate (TEOS), trimethoxysilane derivatives etc., or organic compounds such as thiol derivatives, polytetrafluoroethylene (PTFE) etc. The ethanol-organic mixture is absorbed forming a coating on the surface of the flexible carbon foam and then, the carbon foam is dried. This drying can be conducted in a hot air oven at 100°C;

The flexible hierarchical carbon foam of the invention can be used in a multiple industrial applications. In particular, it can be used in the elaboration of adsorbents for separation processes and gas storage, as electrode materials for batteries, fuel cells, supercapacitors and microelectronic components, as insulators, thermal managements and as support for many catalytic processes.

An additional aspect of the present invention refers to a process for the preparation of a hierarchical graphitized carbon foam, wherein said process comprises:
a) forming a solution comprising a phenolic resin, a poly(alkylene oxide) compound and a metal nitrate salt selected from iron nitrate, cobalt nitrate and nickel nitrate;
b) impregnating a polymeric foam with the solution obtained in step a);
c) conducting a self-assembly of the phenolic resin and the polyalkylene oxide compound in the polymeric foam in the presence of the metal nitrate salt, wherein the self-assembly is conducted by a hydrothermal treatment;
d) subjecting the product obtained in step c) to a heating process to thermally crosslink the phenolic resin;
e) subjecting the product obtained in step d) to a carbonization and graphitization process to remove the polyalkylene oxide compound and the polymeric foam and to form a graphitized carbon foam.

The hierarchical carbon foam has the same meaning as the one defined before.

As mentioned before, this process is based on the process 1 of the invention in which a metal nitrate salt is added in the first step of the process and the carbonization and graphitization are performed in the same step.

The first step of the process 2 of the invention includes the formation of a solution comprising a phenolic resin or a phenolic pre-polymer, a polyalkylene oxide compound and a metal nitrate salt selected from iron nitrate, cobalt nitrate and nickel nitrate.

By the term "phenolic resin or phenolic pre-polymer" it is understood the product resulting from the reaction of phenol, or a substituted phenol, with an aldehyde, in the presence of an acidic or basic catalyst. This phenolic resin is the carbon precursor of the resulting graphitized carbon foam obtained after conducting the process 2 of the invention.

Any phenol of the kind which is able to form condensation products with aldehydes can be used. Such phenols include monohydric and polyhydric phenols, such as pyrocatechol, resorcinol, hydroquinone or phloroglucinol; monoalkyl or polyalkyl substituted phenols, such as cresols or xylenols, including for example 2-, 3- or 4-methyl phenol, 2,3-, 2,4-, 2,5- or 2,6-dimethyl phenol, 3,4-, 3,5-dimethyl phenol, 2,3,5-trimethyl phenol; monoacyl or polyacyl substituted phenols, i.e. those phenols substituted with one or more acyl groups; monoalkoxyl or polyalkoxyl substituted phenols, i.e., those phenols substituted with one or more alkoxyl group, such as 3-methoxy phenol, 3,5-dimethoxy phenol, 5-methoxy resorcinol; halogen-substituted phenols, those substituted with fluorine, bromine, chlorine or iodine, more preferably those substituted with fluorine, such as, 2-fluorophenol, 3-fluorophenol or 4-fluorophenol; polynuclear monohydric or polyhydric phenols, such as naphthols, p,p'-dihydroxydiphenyl dimethyl methane or hydroxyanthracenes.

In a preferred embodiment, the phenol is selected from pyrocatechol, resorcinol, hydroquinone or a halogen-substituted phenol. All of them are more reactive than phenol and can lead to some cross-linking at the pre-polymer production stage. Pyrocatechol, resorcinol and hydroquinone can increase the oxygen functionality of the resins, whereas halogen-substituted phenol, such as 2-fluorophenol, 3-fluorophenol and 4-fluorophenol, provide carbon foams functionalized with fluorine.

The phenols used to make the foam starting material can also be used in admixture with non-phenolic compounds which are able to react with aldehydes in the same way as phenol. These compounds include nitrogen containing nucleophilic compounds that are reactive in polycondensation reactions, such as urea, aromatic (aniline) and heteroaromatic (melamine) amines. These allow the introduction of specific types of nitrogen functionality into the initial polymer (and final carbon) and influence the development of the mesoporous structure of both the resins and the final carbons.

Like hydroquinone and resorcinol, all the nitrogen containing nucleophilic compounds which can be used in the present invention possess two or more active sites and are more reactive in condensation reaction than phenol. It means that they are first to react with primary cross-linking agents forming secondary cross-linking agents in situ. In the case of melamine, it is preferable to prepare the secondary cross-linking agent, hydroxymethylated melamine, in advance.

In another preferred embodiment, the aldehyde includes any suitable aldehyde which reacts with phenols in the same manner, for example, formaldehyde, acetaldehyde or benzaldehyde. More preferably the aldehyde is formaldehyde.

In general, the phenols and aldehydes which can be used in the process of the invention are those described in US 3,960,761 and US 5,047,225, which are incorporated herein by reference.

The phenol pre-polymer can also be a Novolac resin. Novolac resins are typically produced by the acid catalyzed condensation of phenol and formaldehyde in approximately equimolar amounts. Novolacs are essentially linear chains with molecular weights of from 500 to 2000 D, where phenolic moieties are linked with methylene (predominantly) and methylene ether bridges and possess one nucleophilic active site, predominantly in the unsubstituted ortho-position to hydroxyl group. There can be also varying degrees of chain branching depending upon the production conditions.

The reaction of phenol, or a substituted phenol, with an aldehyde, is catalyzed by an acid or base at a aldehyde:phenol ratio which can vary depending on the functionality of the phenol. Preferably, the reaction is catalyzed by hydrochloride, sodium hydroxide or sodium carbonate.

The amount of the phenolic resin in the solution used for the impregnation stage (step b) of the process 2 of the invention) can be adjusted as a function of the diameter of the macropores which it is desired to obtain in the carbon foam on conclusion of the process, it being understood that the lower this amount, the grater the diameter of the macroporous and the finer the internal junctions (walls of the macropores).

Generally, the amount of carbon precursor within the solution varies from 5 to 90% by weight, preferably from 20 to 70% by weight, with respect to the total weight of said solution.

The poly(alkylene oxide) compound is used as structure-directing agent and is the responsible of generating the ordered mesoporous wall structure within the macroporous structure. This compound is typically an amphiphilic poly(alkylene oxide) block copolymer. Preferably, the block copolymer is a triblock copolymer containing segments of poly(ethylene oxide) (hydrophilic) and poly(propylene oxide) (hydrophobic) in such a way that the poly(ethylene oxide) is covalently bond with the opposite ends of the poly(propylene oxide) according to the following formula:

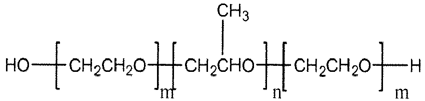

Suitable triblock copolymers are Pluronic F127 (EO₁₀₆PO₇₀EO₁₀₆), Pluronic F123 (EO₂₀PO₇₀EO₂₀) or Pluronic F108 (EO₁₃₂PO₅₀EO₁₃₂).

The solution provided in step a) of the process 2 of the invention also includes a metal nitrate salt selected from iron nitrate, cobalt nitrate and nickel nitrate. By the addition of this metal nitrate salt, complexes between the alkylene oxide units of the poly(alkylene oxide) compound and Fe²⁺, Co²⁺ or Ni²⁺ ions are formed.

The solvent used to prepare the solution of step a) is preferably water or a mixture of water with at least one organic solvent selected from lower alcohols, such as ethanol, methanol, propanol, iso-propanol or butanol; dimethylformamide (DMF), dimethyl sulfoxide (DMSO), tetrahydrofuran (THF), toluene and their mixtures. In a preferred embodiment, the solvent is a mixture of water and ethanol.

In a particular embodiment, the solution comprising the phenolic resin, the polyalkylene oxide compound and the metal nitrate salt is prepared by first dissolving the phenol, or the substituted phenol, and the polyalkylene oxide compound in the solvent. In a subsequent step, the acidic or base catalyst is added to the obtained solution and after that, the aldehyde is also added to the solution until a homogenous solution is obtained. Finally, the metal nitrate salt is added.

In a particular embodiment, the molar composition of the compounds used to form the solution is:
- phenol, or substituted phenol: 1
- aldehyde: 0.5-3
- poly(alkylene oxide): 0.005-0.05
- organic solvent: 10-40
- metal nitrate salt: 0.003-0.3
- water: 50-100

Once the solution comprising the phenolic resin, the polyalkylene oxide compound and the metal nitrate salt is prepared, this is used to impregnate a polymeric foam according to the second step of the process 1 of the invention.

This polymeric foam is used as macrostructure sacrificial template or scaffold and provides a 3D interconnecting macroporous architecture with large voids and interfaces for the self-assembly of the ordered mesostructure.

As polymeric foam, any thermally decomposable foam can be used, such as a polyurethane, polystyrene, polyethylene or polypropylene foam. In a preferred embodiment, the polymeric foam is a polyurethane foam.

The impregnation of the polymeric foam with the solution obtained in step a) can be carried out by spraying, brushing or pouring the solution onto or over the foam or by complete immersion of the foam into the solution for a period of time.

When the polymeric foam is impregnated with the carbon precursor solution, it is infused into the interconnecting 3D networks and large macropore voids by capillarity and wetting driving forces.

In order to fully fill up the macropore voids of the polymeric foam, a squeezing process to remove the air babbles inside the foam can be carried out.

The third step of the process 2 of the invention involves the self-assembly of the phenolic resin and the polyalkylene oxide compound to form a uniform layer of the ordered mesostructured phenolic resin on the 3D interconnecting macropores of the polymeric foam.

The thickness of the layer depends on the concentration of the phenolic resin, however, in a preferred embodiment, the thickness is less than 20 µm.

The self-assembly of the phenolic resin and the polyalkylene oxide compound is performed by a hydrothermal treatment.

A possible mechanism that leads to the formation of ordered carbon mesostructures into the macroporous structure is described below.

The hydroxyl groups of the phenolic compound interact with the alkylene oxide moieties of the poly(alkylene oxide) compound, giving rise to the cross-linking of the interpolymer chains by hydrogen bonding. The interpolymer-chain hydrogen bonding cross-links the poly(alkylene oxide)-metal complexes and thereby stabilize the micelle structures in which the phenolic resin is enriched inside the alkylene oxide domains. The resulting compounds then self-assembly according to the mesoscopic ordering directed principally by the phase separation of the poly(alkylene oxide) species.

In a particular embodiment, this hydrothermal treatment can be conducted at autogeneous pressure which corresponds to the saturated vapor pressure of the carbon precursor solution. The temperature applied in the hydrothermal process ranges from about 40 to about 200°C, more preferably form 40 to 100°C, even more preferably at about 50°C. A skilled person will know how to adapt the temperature depending on the composition of the carbon precursor solution.

Said hydrothermal process is preferably conducted in an autoclave, such as for example in a polypropylene bottle or stainless steel autoclave, keeping the autoclave in a hot air oven which is heated at the temperature required by the process.

During the hydrothermal treatment, the temperature and pressure are holding in the autoclave for generally about 1 to 4 days. After finishing the holding period, a coated polymeric foam is obtained and then the solvent can be easily removed due to the improved drying performance of the resulting product.

This hydrothermal treatment offers many advantages with respect to the conventional evaporation induced self-assembly (EISA) method at room temperature. From the environmental concern, hydrothermal processes are more environmentally benign since the waste solvents can be recycled. In addition to that, the process is more economic since it requires a conventional and easy method to separate the product from the solvents, in contrast to the EISA method which requires the solvents to be evaporated at room temperature. Thus, the hydrothermal treatment allows the implementation of the process of the invention in a large-scale industrial production.

Furthermore, as shown in the examples below, the hydrothermal treatment contributes to the formation of a carbon foam with better thermal and electrical conductivity, as well as thermal stability, as a result of providing a carbon foam with higher surface area and higher porosity.

In addition to that, the hydrothermal treatment contributes to the reduction of the graphitization temperature in the subsequent graphitization step that leads to the formation of the graphitized carbon foam of the invention.

Separation of the impregnated foam from the carbon precursor solution may be accomplished by filtration, decantation or other physical separation techniques known to those skilled in the art.

In a subsequent step, the coated foam obtained after conducting step c) of the process 2 of the invention, is subjected to a heating process in order to thermally cross-link the phenolic resin.

In a particular embodiment, when formaldehyde is used in the production of the phenolic resin, it cross-links phenolic moieties forming -CH₂- bridges in strong acidic and strong alkali media.

In a preferred embodiment, the heating process is conducted at a temperature ranging from 70 to 100°C, more preferably at about 80°C.

Said heating process can be carried out in a conventional oven.

In order to convert the coated polymeric foam to a carbon foam, said coated foam is then subjected to a carbonization process according to the step e) of the process 2 of the invention.

By "carbonization" it is understood the heating of the impregnated polymeric foam to a temperature above the thermal decomposition temperature of the poly(alkylene oxide) compound and the polymeric foam whereby they are substantially converted to gaseous materials.

In a preferred embodiment, the carbonization process is carried out by heating the impregnated foam to a temperature of from about 500°C to about 1000°C, in an inert or air-excluded atmosphere, such as in the presence of nitrogen or argon. More preferably, the temperature to be applied ranges between 600 and 800°C, even more preferably is about 800°C.

The heating rate should be controlled in order to avoid as much as possible the shrinkage of the polymeric foam during carbonization. However, due to the presence of mesopores in these materials, which provide efficient escape routes for the volatile products, the heating rates employed can be from 0.5°C to 10°C per minute.

In addition to that, care should be taken to ensure uniform heating of the polymeric foam for effective carbonization.

During carbonization, the poly(alkylene oxide) and the polymeric foam template are removed. The ordered mesoporous resin is yielded on the surface of the macroporous of the polymeric foam. The primitive macroporous architecture with the 3D interconnecting macroporous is retained during this step.

In addition to that, the carbonization step allows the reduction of the metal nitrates into metallic nanoparticles. In fact, the carbon matrix serves as a block to confine the growth of metal nanoparticles during calcination. It should be said that the combination of the hydrothermal treatment in step c) of the process 2 of the invention together with the addition of a metal nitrate salt into the solution of step a) allows the metallic nanoparticles to be well dispersed and homogeneously distributed on the carbon matrix, in contrast to the bulk agglomerates that are formed when other self-assembly methods are used, such as solvent evaporation method. This well dispersed and homogeneously distributed nanoparticles act as catalyst allowing the graphitization of the carbonized macro and mesoporous carbon foam in the same step.

Advantageously, by using the well dispersed and homogeneously distributed nanoparticles formed on the carbon matrix as heterogeneous catalyst, a higher degree of graphitization is obtained.

Furthermore, these metallic nanoparticles allow the graphitization to be carried out at lower temperatures than conventional (ca. 2500-3000°C) in order to minimize the energy consumption.

In fact, the graphitization can be carried out at a temperature ranging from 700 to 1000°C and no separate steps for carbonization and graphitization are required.

In another particular embodiment, the catalytic graphitization is conducted in an inert or air-excluded atmosphere, such as in the presence of nitrogen or argon.

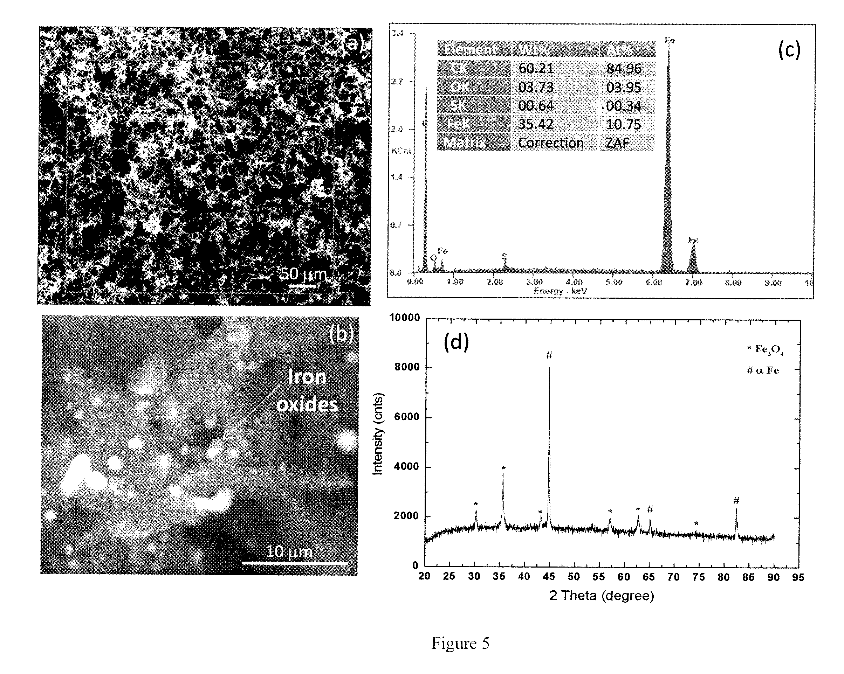

Another aspect of the present invention refers to a graphitized hierarchically carbon foam obtainable by the process 2 of the invention as defined above. As mentioned before, this graphitized carbon foam is characterized for having a higher degree of graphitization as confirmed the XRD, TEM and Raman analysis (figures 5, 9 and 10) provided in the experimental part below.

In a particular embodiment, the graphitized carbon foam has a total porosity from about 65% to about 95%, more preferably from about 70% to about 95%.

In a preferred embodiment, at least about 90% of the total pore volume, more preferably at least about 95% of the total pore volume corresponds to the macroporous fraction, whereas at least 1% of the total pore volume, more preferably from about 2% to about 10% of the total pore volume corresponds to the mesoporous fraction.

In another preferred embodiment, the macroporous fraction of the bimodal distribution in the carbon foam has an average size of at least 50 nm, more preferably from 50 µm to 1 mm, even more preferably from 50 µm to 700 µm.

In another preferred embodiment, the mesoporous fraction of the bimodal distribution in the carbon foam has an average size from 2 to 50 nm, more preferably from 2 nm to 10 nm.

In a particular embodiment, the graphitized carbon foam of the invention has a relatively uniform distribution of macroporous and mesoporous in order to provide a suitable compressive strength. In addition to that, the pores, both macroporous and mesoporous, are relatively isotropic, by which is meant that the pores are relatively spherical, meaning that the pores have, on average, an aspect ratio from about 1.0 (which represents a perfect spherical geometry) to about 1.5. The aspect ratio is determined by dividing the longer dimension of any pore with its shorter dimension.

The hierarchical carbon foam of the invention can be used in a multiple industrial applications. In particular, it can be used in the elaboration of adsorption-separation filters, insulators, catalytic converters, heat exchangers, heat sinks and thermal and electrical energy stores. In particular, it can be used in the manufacture of hydrogen storage devices, of supercapacitors or of electrodes, such as, for example, of negative electrodes in lithium or sodium batteries or of macroporous conducting electrodes which can be used in electrocatalysis; in carrying out chemical reactions catalyzed in a heterogeneous phase or in the manufacture of enzymatic sensors or biofuel cells, that is to say of cells in which the cathode and the anode are made from the foam material in accordance with the present invention.

### Examples

### Example 1. Preparation of flexible macro and mesoporous, carbon foam according to the process 1 of the invention

Resorcinol (1.65 g) and Pluronic F127 (2.5 g) were dissolved in a mixture of 20 ml of water and 20 ml of ethanol and the mixture was stirred for 15 min. Then 0.2 g of 37 wt.% hydrochloric acid was added to the above mixture and stirred for 1 h. 2.5 g of 37 wt.% formaldehyde solution was added drop wise under stirring. The reaction mixture was further vigorously stirred for another 1 h, and a homogeneous solution was obtained.

This solution was then transferred to a Teflon-lined autoclave or PP bottle.

A melamine foam (1g) was washed with ethanol and introduced into the polymeric solution previously obtained in order to impregnate said foam with the polymeric solution within the sealed autoclave. Then, a hydrothermal treatment was carried out by using autoclave (polypropylene (PP) bottle or stainless steel autoclave) and the autoclave was kept in a hot air oven which heated at 50°C for 4 days. The resin coated foam was collected by simple filtration, and dried in an oven at 50°C for 12 h, and then 80°C for 12 h. The color of the foam was changed into dark reddish brown. Finally, the impregnated foam was carbonized at 800-1000°C for 1 h under N₂ flow in a tubular furnace with a heating rate of 1°C/min.

The physicochemical properties of the flexible macro and mesoporous carbon foam obtained following this process are summarized in Table I. For comparative purposes, the properties of a flexible amorphous macroporous carbon as described by Chen, S. et al. (Energy Environ. Sci., 2013, 6, 2435-2439) are also provided.

| **Properties** | **Flexible amorphous macroporous carbon foam (comparative)** | **Flexible amorphous macroporous and mesoporous carbon foam** |
|---|---|---|
| Density (cm³/g) | 0.008 | 0.015 |
| Surface area (m²/g) | 225 | 1153 |
| Mesopore volume (cm³/g. nm) | 0.13 | 1.02 |
| Micropore volume (cm³/g. nm) | 0.07 | 0.313 |
| Average mesopores diameter (nm) | No mesopores | 4.80 (Highly ordered mesopores with narrow pore size distribution) |
| Total Porosity (%) | ∼ 97 | ∼ 95 |

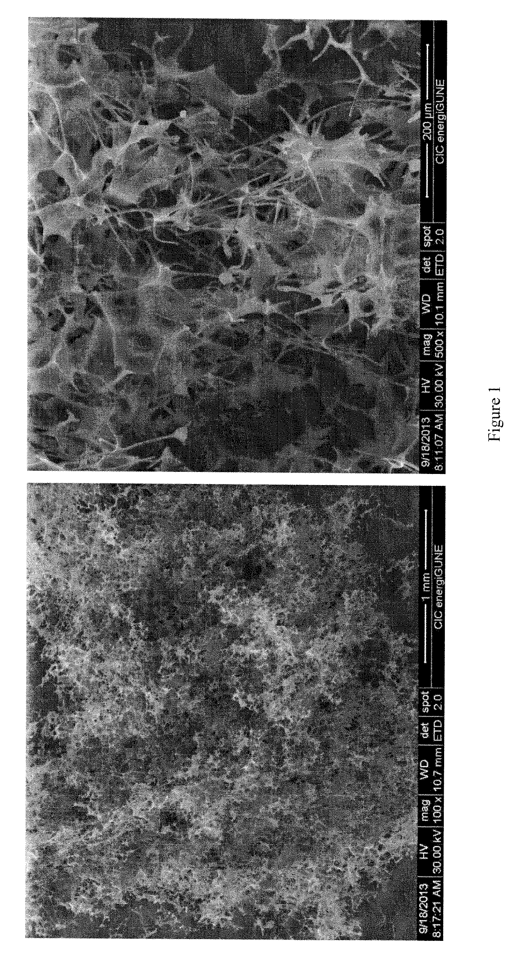

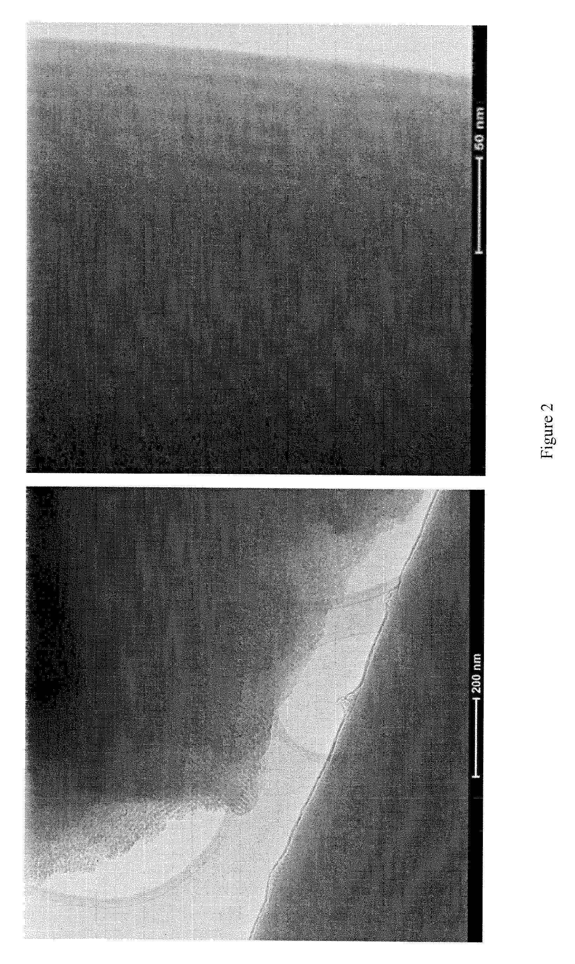

Figure 1 shows the SEM pictures of the bimodal flexible carbon foam evidencing the presence of an interconnected macroporous structure. Figure 2 shows the TEM pictures of said flexible carbon foam evidencing the presence of ordered mesopores.

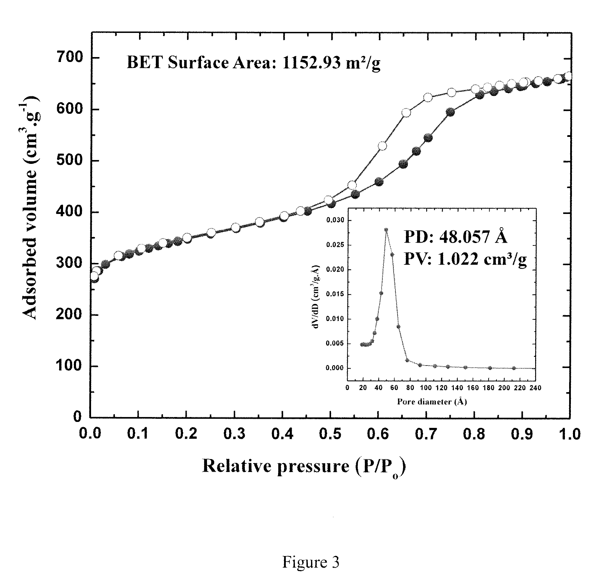

The results of the nitrogen adsorption-desorption isotherm and pore size distributions of bimodal flexible carbon foam are depicted in Figure 3.

### Example 2. Functionalization of the flexible macro and mesoporous, carbon foam with graphite particles

Carbonized flexible macro and mesoporous carbon foam (0.02 g) obtained following the process of example 1 was immersed in an ethanol solution (10 ml) containing commercial graphite particles (0.06 g). The graphite particles were then absorbed forming a coating on the surface of the carbon foam, and then the coated foam was subsequently dried. This drying was conducted in a hot air oven at 100 °C for 12 hrs.

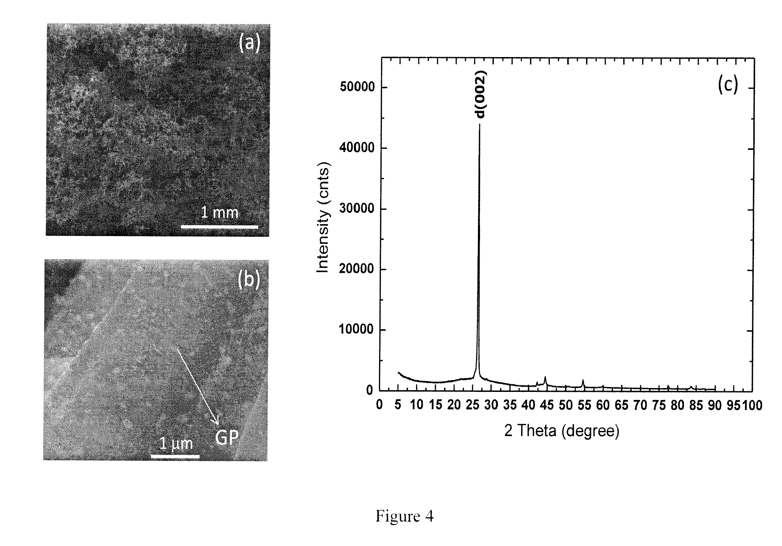

Figures 4(a) and 4(b) show the SEM pictures of the obtained flexible macro and mesoporous carbon foam functionalized with graphite particles, whereas Figure 4(c) shows its XRD pattern.

### Example 3. Functionalization of the flexible macro and mesoporous carbon foam with metal/metal oxides

Carbonized flexible macro and mesoporous carbon foam (0.02 g) obtained according to process of example 1 was immersed in ethanol solution (10 ml) containing iron nitrate (0.4 g) as metal precursor. This metal precursor was then absorbed forming a coating on the surface of the carbon foam, and then the coated foam was subsequently dried. This drying was conducted in a hot air oven at 100 °C for 12 hrs.

Finally, the carbon foam coated with the metal precursor was carbonized in order to get the metal/metal oxides on the surface of the carbon foam. The carbonization was carried out at 800 °C for 1 hr under N₂ flow.

Figure 5(a) and 5(b) show the SEM pictures of the obtained flexible macro and mesoporous carbon foam functionalized with metal/metal oxides, whereas Figure 5(c) shows the Energy dispersive X-ray analysis (EDAX) and Figure 5(d) shows its XRD pattern.

### Example 4. Functionalization of the flexible macro and mesoporous carbon foam with carbon nanotubes (CNTs)/carbon nanofibers (CNFs)

Carbonized flexible macro and mesoporous carbon foam (0.02 g) obtained following the process of example 1 was immersed in ethanol solution (10 ml) containing Ferrocene (0.005 g). Ferrocene was used as iron source which acts as catalyst for growing the carbon nanotubes or carbon nanofibers on the surface of the flexible carbon foam. Ferrocene was absorbed forming a coating on the surface of the carbon foam, and then the coated foam was dried and carbonized in order to get iron particles on the surface of the carbon foam. The drying was conducted in a hot air oven at 100°C for 12hrs, whereas the carbonization was carried out at 800°C for 1 hr under N₂ flow.

The growing of carbon nanotubes or nanofibers on the surface of the flexible carbon foam was achieved by the chemical vapour deposition (CVD) method using acetylene as carbon source. In a typical experiment, 20 sccm of acetylene (C₂H₂) gas diluted with mixtures of 70 v % of helium (He, 700 sccm) as carrier gas, and 30 v % of hydrogen (H₂, 300 sccm) was passed through the reactor at 700 °C for 10 min.

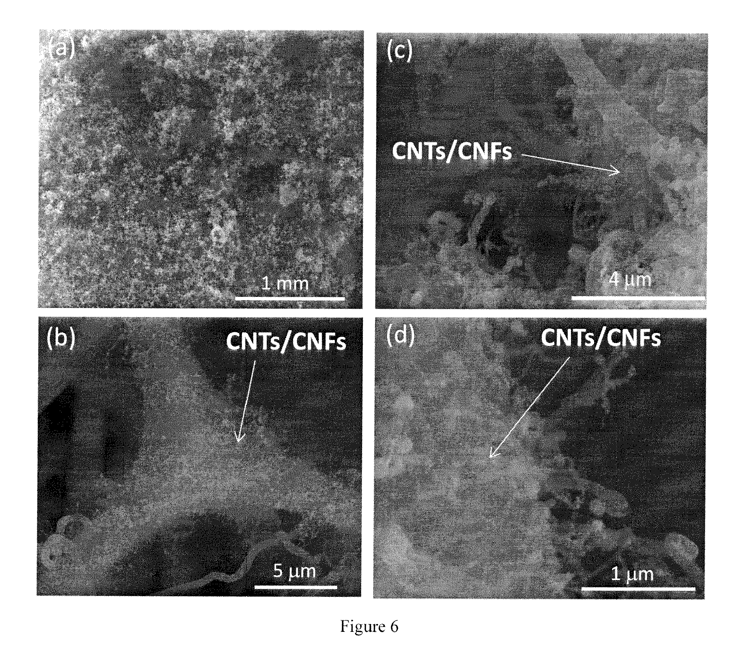

Figures 6(a) to (d) show SEM pictures of the obtained flexible macro and mesoporous carbon foam functionalized with CNTs/CNFs.

### Example 5. Functionalization of the flexible macro and mesoporous carbon foam with a hydrophobic coating

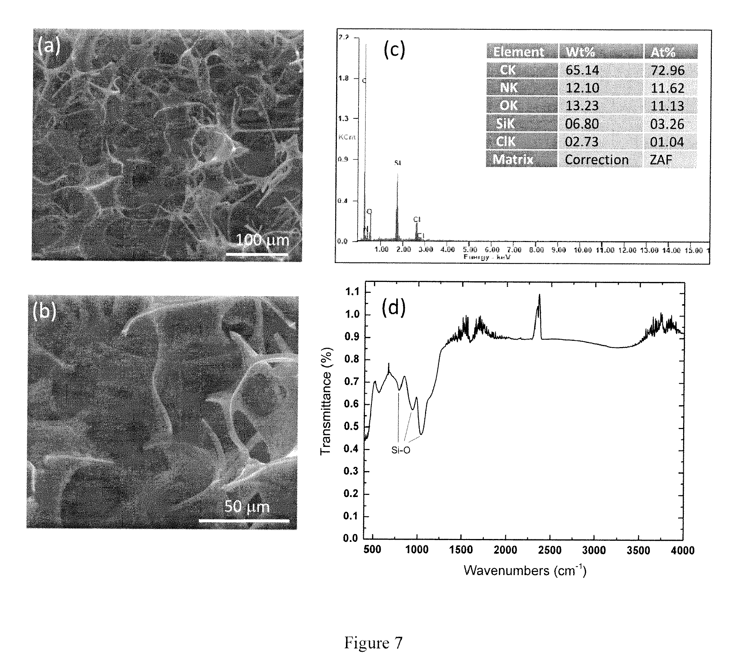

Carbonized flexible macro and mesoporous carbon foam (0.02 g) obtained according to the process of example 1 was immersed in ethanol solution (5 ml) containing tetraethyl orthosilicate (TEOS, 0.1 g) and 37 wt. % HCl (100 µl). TEOS was then absorbed forming a coating on the surface of the foam, and then the coated foam was subsequently dried. This drying was conducted in a hot air oven at 100 °C for 3 hrs. Figure 7(a) and 7(b) show the SEM pictures of the obtained flexible macro and mesoporous carbon foam functionalized with the hydrophobic silica coating, whereas Figure 5(c) shows the Energy dispersive X-ray analysis (EDAX) and Figure 5(d) shows its FT-IR spectrum.

### Example 6. Preparation of graphitized macro and mesoporous carbon foam by hydrothermal treatment according to the process 2 of the invention

Resorcinol (1.65 g) and Pluronic F 127 (2.5 g) were dissolved in a mixture of 20 ml of water and 20 ml of ethanol and the mixture was stirred for 15 min. Then 0.2 g of 37 wt.% hydrochloric acid was added to the above mixture and stirred for 1 h. 2.5 g of 37 wt.% formaldehyde solution was added drop wise under stirring. The reaction mixture was further vigorously stirred for another 1 h, and a homogeneous solution was obtained.

Then, iron nitrate (3 mmol/gC) was added to the above mixture and stirred for 1 h.

This solution was then transferred to a Teflon-lined autoclave or polypropylene bottle.

A polyurethane foam (1.5 g) was washed with ethanol and introduced into the polymeric solution previously obtained in order to impregnate said foam with the polymeric solution within the sealed autoclave. Then, a hydrothermal treatment was carried out by using autoclave (polypropylene (PP) bottle or stainless steel autoclave) and the autoclave was kept in a hot air oven which heated at 50°C for 4 days. The resin coated polymeric foam was collected by simple filtration, and dried in an oven at 50°C for 12 h, and then 80°C for 12 h. The color of the polymeric foam was changed into dark reddish brown. Finally, the impregnated polymeric foam was carbonized at 1000°C for 1 h under N₂ flow in a tubular furnace with a heating rate of 1°C/min.

In this process, graphitization occurs during the carbonization process, so these steps are not separated.

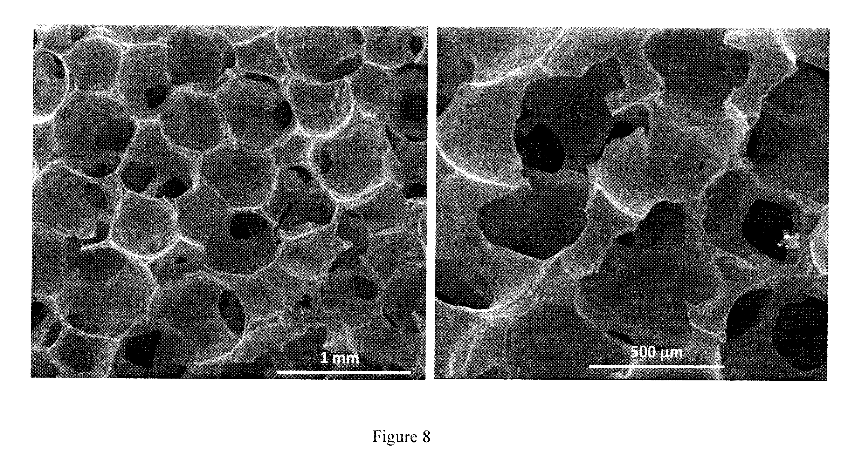

Figure 8 shows the SEM pictures of the graphitized macro and mesoporous carbon foam obtained according to this process.

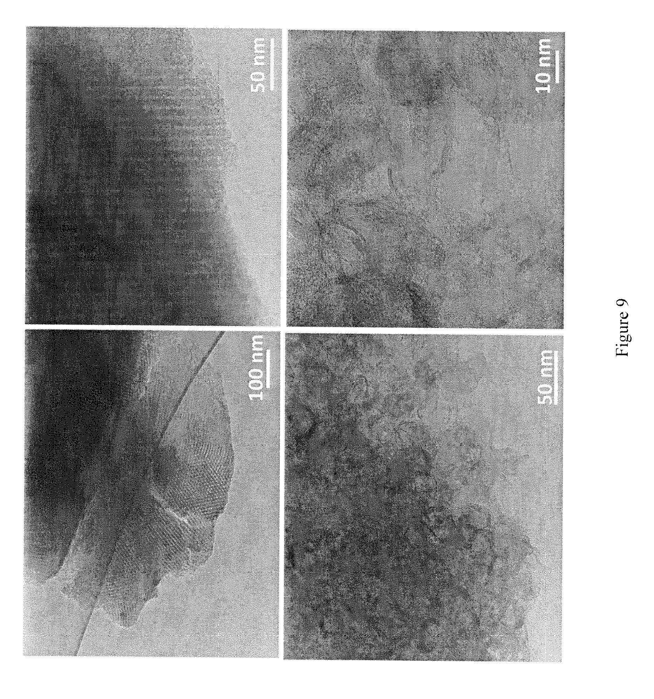

Figure 9 shows the TEM pictures of the graphitized macro and mesoporous carbon foam obtained according to this process wherein the presence of highly ordered mesoporous structure, even after graphitization, can be observed.

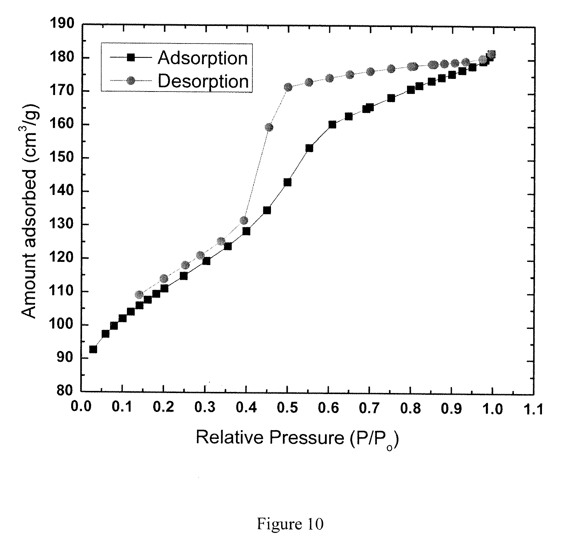

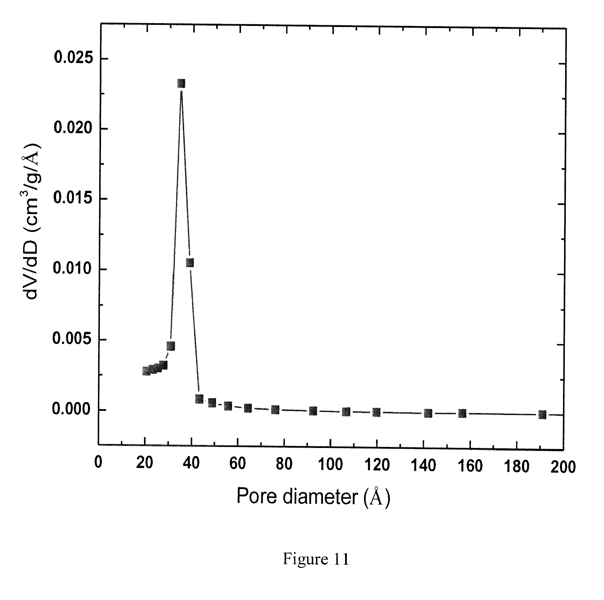

The results of the nitrogen adsorption-desorption isotherm and pore size distributions of graphitized bimodal carbon foam are depicted in Figures 10 and 11, respectively.

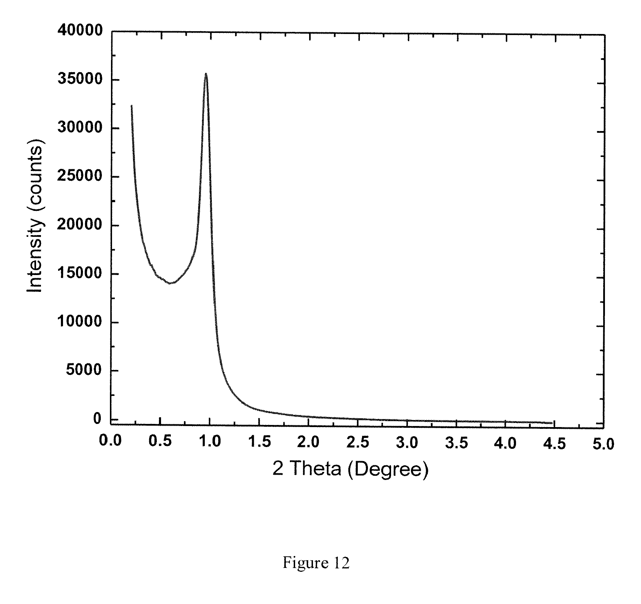

In addition to that, the small-angle X-ray scattering (SAXS) pattern of the carbon sample is depicted in Figure 12, which clearly shows the characteristic low-angle peak of a mesoporous material.

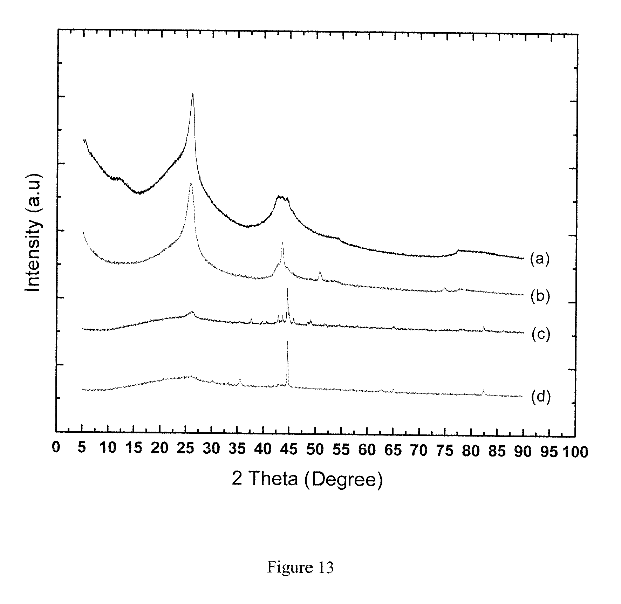

Furthermore, the results of X-ray diffraction as depicted in Figure 13(a) clearly showed a very sharp and higher intensity of peak at 2θ of 26° (d₀₀₂ spacing of 0.3409 nm) which confirms the presence of more crystalline and graphitic structure.

### Example 7 comparative. Preparation of graphitized macro and mesoporous carbon foam by the addition of iron nitrate in the last graphitization step

The degree of graphitization of a macro/mesoporous carbon foam obtained following the process described in example 6 has been compared with that of a graphitized macro/mesoporous carbon foam obtained by a process comprising the addition of the iron nitrate in the last graphitization step, instead of the step a) as in the process 2 of the invention.

The preparation procedure is given below.

Resorcinol (1.65 g) and Pluronic F127 (2.5 g) were dissolved in a mixture of 20 ml of water and 20 ml of ethanol and the mixture was stirred for 15 min. Then, 0.2 g of 37 wt.% hydrochloric acid was added to the above mixture and stirred for 1 h. 2.5 g of 37 wt.% formaldehyde solution was added drop wise under stirring. The reaction mixture was further vigorously stirred for another 1 h, and a homogeneous solution was obtained. This solution was then transferred to a Teflon-lined autoclave or PP bottle. A polyurethane foam (1.5 g) was washed with ethanol and introduced into the polymeric solution previously obtained in order to impregnate said foam with the polymeric solution within the sealed autoclave. Then, a hydrothermal treatment was carried out by using autoclave (polypropylene (PP) bottle or stainless steel autoclave) and the autoclave was kept in a hot air oven which heated at 50°C for 4 days (ca. 1-4 days). The resin coated polymeric foam was collected by simple filtration, and dried in an oven at 50°C for 12 h, and then 80°C for 12 h. The color of the polymeric foam was changed into dark reddish brown. Finally, the impregnated polymeric foam was carbonized at 1000°C for 1 h under N₂ flow in a tubular furnace with the heating rate of 1°C/min.

The carbonized macro-mesoporous carbon foam obtained above was impregnated with a solution of iron nitrate in ethanol (3mmol metal/gC) and then the impregnated carbon foam was graphitized at 1000°C for Ih under N₂ flow in a tubular furnace with the heating rate of 1°C/min. Finally, the carbon material was washed with HCl (5-10%) solution in order to remove the metal particles.

The results of X-ray diffraction as depicted in Figure 13(b) showed a lower intensity of peak at 2θ of 26° for the carbon foam obtained by the process of comparative example 7 in contrast to the carbon foam (Figure 13(a)) obtained by the process 2 of the invention, which confirms the presence of higher degree of graphitization in the carbon foam of the invention.

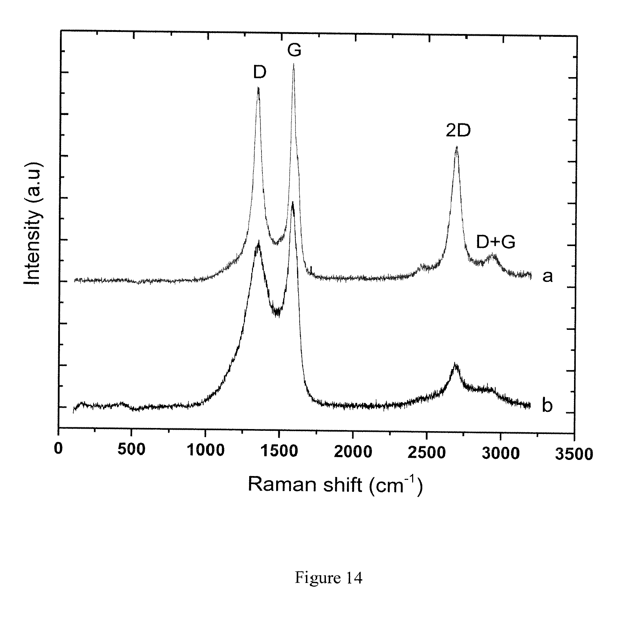

Furthermore, the Raman spectra depicted in Figure 14(a) showed a very sharp and higher intensity of peaks G and 2D for the carbon foam obtained by the process 2 of the invention as compared to that obtained in Figure 14(b) for the carbon foam obtained by the process of comparative example 7. The overtone of the D band, usually denoted as 2D or G', is observed at 2693 cm⁻¹ which is associated with the degree of the graphitic crystalline phase and the G band at 1586 cm⁻¹ is associated with the sp² vibration of a perfect graphite crystal.

### Example 8 comparative. Reparation of a graphitized macro/mesoporous carbon foam and a graphitized macroporous carbon foam by a process comprising the EISA method and the addition of a graphitization catalyst in the first step of the process

The degree of graphitization, surface area, pore volume and thermal stability of macro/mesoporous carbon foams obtained following the process described in example 6 have been compared with those of a graphitized macro/mesoporous carbon foam and a macroporous carbon foam obtained by a process comprising: a) the EISA method to conduct the thermopolymerization of the polymer precursors, instead of the hydrothermal treatment of example 6; and b) the addition of the iron nitrate in the first step of the process as in the process of the invention.

The preparation procedure is given below.

Resorcinol (1.65 g) and Pluronic F127 (2.5 g) were dissolved in a mixture of 20 ml of water and 20 ml of ethanol and the mixture was stirred for 15 min. Then 0.2 g of 37 wt.% hydrochloric acid was added to the above mixture and stirred for 1 h. 2.5 g of 37 wt.% formaldehyde solution was added drop wise under stirring. The reaction mixture was further vigorously stirred for another 1 h, and a homogeneous solution was obtained.

Then, iron nitrate (3 mmol/gC) was added to the above mixture and stirred for 1 h.

A polyurethane foam (1.5 g) was washed with ethanol and impregnated in the above polymeric mixture which was then transferred into a dish and allowed for solvents evaporation at room temperature. Then, thermopolymerization of the polymer precursors was carried out at 50°C for 12 h and then 80°C for 12 h in an oven. Finally, the polymeric foam was carbonized at 1000°C for 1 h under N₂ flow in a tubular furnace with the heating rate of 1°C/min. In this process, graphitization occurs during the carbonization process, so these steps are not separated.

The same procedure has been repeated in the absence of Pluronic F127, thus obtaining a graphitized macroporous carbon foam.

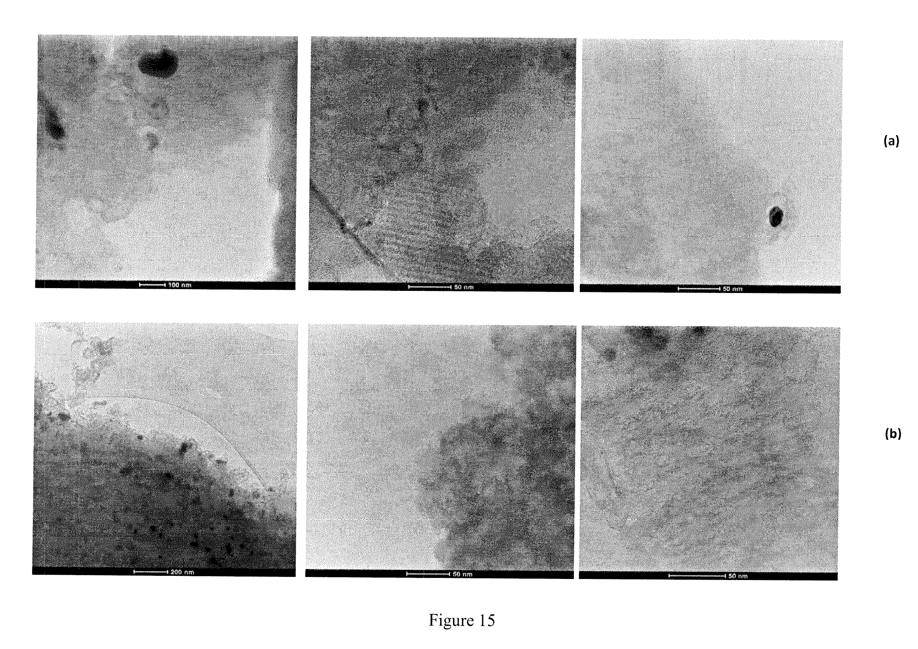

It can be observed from Figure 15 that the evaporation induced self-assembly (EISA method) used in the processes of example 8 can favor the formation of bulk iron particles due to agglomeration which are not active catalyst for graphitization. During the solvent evaporation, most of the iron species are not well dispersed in the polymeric mixture and then enhanced the bulk deposition of iron species on the surface of the polymeric foam. During the calcination, bulk deposition of iron species can be converted into bulk iron particles which reduce the degree of graphitization.

Furthermore, the XRD results of macro/mesoporous carbon foam (Figure 13(c)) and macroporous carbon foam (Figure 13(d)) clearly demonstrate that these carbon foams have very less degree of graphitization or very less graphitic character.

The properties of the graphitized carbon foam obtained from the process described in examples 6 and 8 are summarized in Table II.

| | Surface Area (m²/g) | Mesopores Volume (cm³/g) | Mesopores Average Diameter (nm) | Thermal Stability in air (°C) |
|---|---|---|---|---|
| Example 6 (graphitized macro/mesoporous carbon foam of the invention) | 383 | 0.28 | 3.49 | 500 |
| Comparative Example 8 (graphitized macro/mesoporous carbon foam) | 259 | 0.25 | 5.90 | 450 |
| Comparative Example 8 (graphitized macroporous carbon foam) | 130 | 0.11 | 4.45 | 440 |

It is derivable from the experimental data, that the process of the invention provides a graphitized macro/mesoporous carbon foam having higher surface area, higher pore volume and lower average pore size, which contributes to a higher electrical and thermal conductivity, while maintaining or improving the thermal stability.

## Claims

1. A process for preparing a flexible hierarchical carbon foam, wherein said process comprises:
a. providing a solution comprising a phenolic resin and a poly(alkylene oxide) compound;
b. impregnating a melamine foam or a carbonized melamine foam with the solution obtained in step a);
c. conducting a self-assembly of the phenolic resin and the polyalkylene oxide compound in the melamine foam or carbonized melamine foam, wherein said self-assembly is conducted by a hydrothermal treatment;
d. subjecting the product obtained in step c) to a heating process to thermally crosslink the phenolic resin;
e. subjecting the product obtained in step d) to a carbonization process to remove the polyalkylene oxide compound and the melamine foam and to form a carbonized carbon foam; and
f. optionally, subjecting the carbonized carbon foam obtained in step e) to a graphitization step.

2. The process according to claim 1 which comprises:
a. providing a solution comprising a phenolic resin, a poly(alkylene oxide) compound and a metal nitrate salt selected from iron nitrate, cobalt nitrate and nickel nitrate;
b. impregnating a melamine foam or a carbonized melamine foam with the solution obtained in step a);
c. conducting a self-assembly of the phenolic resin and the polyalkylene oxide compound in the melamine foam or carbonized melamine foam, wherein said self-assembly is conducted by a hydrothermal treatment;
d. subjecting the product obtained in step c) to a heating process to thermally crosslink the phenolic resin;
e. subjecting the product obtained in step d) to a carbonization and graphitization process to remove the polyalkylene oxide compound and the melamine foam and to form a carbonized and graphitized carbon foam.

3. Process according to any of claims claim 1 to 2, wherein the phenolic resin used in step a) is the product resulting from the reaction of a phenol, or a substituted phenol, with an aldehyde.

4. Process according to claim 3, wherein the substituted phenol is a polyhydric phenol selected from pyrocatechol, resorcinol, hydroquinone and phloroglucinol; a monoalkyl or polyalkyl substituted phenol selected from cresols and xylenols; a monoacyl or polyacyl substituted phenol; a monoalkoxyl or polyalkoxyl substituted phenols; or a halogen-substituted phenol.

5. The process according to any of claims 3 to 4, wherein the aldehyde is formaldehyde.

6. The process according to any of claims 1 to 5, wherein the poly(alkylene oxide) is an amphiphilic poly(alkylene oxide) block copolymer, selected from Pluronic F127, Pluronic F123 and Pluronic F108.

7. The process according to any of claims 1 to 6, wherein the hydrothermal treatment is conducted at autogeneous pressure and at a temperature ranging from 40 to 200°C.

8. A flexible hierarchical carbon foam obtainable by a process as defined in any of claims 1 and 3 to 7, having an interconnected macroporous structure with an ordered mesoporous wall structure.

9. A flexible graphitized hierarchical carbon foam obtainable by a process as defined in any of claims 1 to 7, having an interconnected macroporous structure with an ordered mesoporous wall structure.

10. A flexible hierarchical carbon foam or a flexible graphitized hierarchical carbon foam as defined in any of claims 8 and 9, wherein the macropores have a diameter ranging from 50 µm to 1 mm.

11. A flexible hierarchical carbon foam or a flexible graphitized hierarchical carbon foam as defined in any of claims 8 to 10, wherein the mesopores have a pore size ranging from 2 to 10 nm.

12. A flexible hierarchical carbon foam or a flexible graphitized hierarchical carbon foam as defined in any of claims 8 to 11, which is functionalized with graphite particles, metal or metal oxides, carbon nanotubes and/or nanofibers, or with a hydrophobic coating.

13. A process for preparing a hierarchical graphitized carbon foam, wherein said process comprises:
a. forming a solution comprising a phenolic resin, a poly(alkylene oxide) compound and a metal nitrate salt selected from iron nitrate, cobalt nitrate and nickel nitrate;
b. impregnating a polymeric foam with the solution obtained in step a);
c. conducting a self-assembly of the phenolic resin and the polyalkylene oxide compound in the polymeric foam in the presence of the metal nitrate salt, wherein the self-assembly is conducted by a hydrothermal treatment;
d. subjecting the product obtained in step c) to a heating process to thermally crosslink the phenolic resin;
e. subjecting the product obtained in step d) to a carbonization and graphitization process to remove the polyalkylene oxide compound and the polymeric foam and to form a graphitized carbon foam.

14. The process according to claim 13, wherein the polymeric foam is a polyurethane foam.

15. A graphitized hierarchical carbon foam obtainable by a process as defined in any of claims 13 to 14.
